(19) Europäisches Patentamt

European Patent Office

Office européen des brevets

(11) Veröffentlichungsnummer: **0 212 486**
**B1**

(12) **EUROPÄISCHE PATENTSCHRIFT**

(45) Veröffentlichungstag der Patentschrift: **14.11.90**

(21) Anmeldenummer: **86110961.9**

(22) Anmeldetag: **08.08.86**

(51) Int. Cl.⁵: **C 08 K 3/26, C 08 L 23/02**

(54) **Polyolefin-Formmasse.**

(30) Priorität: **19.08.85 DE 3529651**

(43) Veröffentlichungstag der Anmeldung:
**04.03.87 Patentblatt 87/10**

(45) Bekanntmachung des Hinweises auf die
Patenterteilung:
**14.11.90 Patentblatt 90/46**

(84) Benannte Vertragsstaaten:
**BE DE FR GB IT NL**

(56) Entgegenhaltungen:
**EP-A-0 000 084**
**DE-B-1 028 332**

(73) Patentinhaber: **HOECHST**
**AKTIENGESELLSCHAFT**
**Postfach 80 03 20**
**D-6230 Frankfurt am Main 80 (DE)**

(72) Erfinder: **Bonnke, Martin, Dr.**
**Im Lerchenfeld 47**
**D-6234 Hattersheim am Main (DE)**
Erfinder: **Bothe, Lothar, Dr.**
**Am Heiligenhaus 9**
**D-6500 Mainz (DE)**

Courier Press, Leamington Spa, England.

**Beschreibung**

Die Erfindung betrifft eine Polyolefin-Formmasse, welche bei der Verarbeitung weniger Korrosion an den Verarbeitungsmaschinen bewirkt.

Bei der Verarbeitung von Polyolefin-Formmassen zu Formteilen tritt häufig Korrosion an den Metallteilen auf, die mit der heißen Formmasse in Berührung kommen. Es hat daher nicht an Versuchen gefehlt, diesen Mangel zu beseitigen.

Es ist bekannt, derartigen Formmassen Zusatzstoffe wie Calciumstearat oder Trikaliumcitrat oder Hydrotalcit zur Verminderung der Korrosion an den Verarbeitungsmaschinen zuzusetzen. Allerdings kann es bei der Verarbeitung zu unerwünschten Ablagerungen an den Maschinenteilen und/oder Auftreten von Dämpfen kommen, was zu Schwierigkeiten in der Produktion führt, während in anderen Fällen die Farbqualität der Formkörper verschlechtert wird (Vergilbung).

Es ist weiterhin bekannt, Niederdruckpolyethylen kleine Mengen verschiedener Zusatzstoffe zuzufügen, um die negativen Einflüsse von Katalysatorresten zu beseitigen (vgl. DE—AS 1028 332). Unter vielen anderen Stoffen wird auch Calciumcarbonat genannt, am wirksamsten soll jedoch Calciumstearat sein. Es hat sich jedoch gezeigt, daß im vorliegenden Fall selbst Calciumstearat nicht wirksam genug ist.

Es wurde nun gefunden, daß eine Polyolefin-Formmasse, welche eine sehr geringe Menge eines speziellen Calaciumcarbonates enthält, bei Verarbeitung auf Maschinen weniger Korrosion an den Maschinen bewirkt, sich keine Ablagerungen bilden bzw. Ausdampfungen auftreten, bei gleichzeitig guter Farbqualität der hergestellten Formkörper.

Die Erfindung betrifft somit eine Polyolefin-Formmasse, bestehend aus einem Homo- oder Copolymerisat eines 1-Olefins mit 2 bis 10 Kohlenstoffatomen, 0,01 bis 0,2 Gew.-%, bezogen auf das Polyolefin, eines Calciumcarbonats, welches eine Teilchengröße kleiner 10 μm, eine mittlere Teilchengröße kleiner 0,1 μm, eine spezifische Oberfläche größer 40 m²/g und einen Weißgrad größer 90% besitzt, sowie gegebenenfalls üblichen anderen Hilfs- bzw. Zusatzstoffen in üblichen Mengen.

Für die erfindungsgemäße Polyolefin-Formmasse eignen sich als Basispolymere Homo- oder Copolymerisate von 1-Olefinen mit 2 bis 10 Kohlenstoffatomen, beispielsweise von Ethylen, Propylen, Buten-1, 4-Methylpenten-1. Infrage kommen somit Polyethylen, Polypropylen, Polybuten-1, Poly-(1-methyl)-penten-1, Ethylen-Propylen-Copolymerisate, Ethylen-Buten-Copolymerisate, udgl., sowie Gemische dieser Polymerisate. Vorzugsweise wird Polypropylen eingesetzt.

Das in der Formmasse zum Einsatz kommende Calciumcarbonat muß ganz spezifische Eigenschaften besitzen. Die Korngröße des Calciumcarbonates soll so fein wie möglich sein. Die Teilchen sollen kleiner 10 μm, vorzugsweise kleiner 7 μm sein, wobei der mittlere Teilchendurchmesser kleiner 0,1 μm, vorzugsweise kleiner 0,05 μm sein soll. Die spezifische Oberfläche des Calciumcarbonats soll über 40 m²/g, bevorzugt über 80 m²/g liegen. Der Weißgrad soll mehr als 90, bevorzugt mehr als 95% betragen.

Das Calciumcarbonat wird in einer Menge von 0,01 bis 0,2, bevorzugt 0,03 bis 0,1 Gew.-%, bezogen auf das Polyolefin, eingesetzt.

Die erfindungsgemäße Formmasse kann die üblichen, die Verarbeitung erleichternden und die physikalischen Eigenschaften verbessernden Zusatzstoffe enthalten. Als solche sind zu nennen: Licht- und Wärmestabilisatoren, Antioxidantien, Antistatika, Gleitmittel, Nukleierungsmittel, Antiblockmittel sowie Füllstoffe, Farbpigmente, synthetische und natürliche Harze und Flammschutzmittel. Die erste Gruppe ist in der Formmasse im allgemeinen in einer Menge von 0,01 bis 5 Gew.-%, berechnet auf die Menge Polymer (+Füllstoff), enthalten. Füllstoffe, Farbpigmente, synthetische und natürliche Harze und Flammschutzmittel werden in einer Menge entsprechend den bestehenden Bedürfnissen eingesetzt.

Das Einarbeiten des Calciumcarbonat in das Polyolefin geschieht auf bekannte Weise, beispielsweise mittels Mischer, Extruder, Walze, Kneter, wobei bei der Einarbeitung auch ein Masterbatch des Calciumcarbonat eingesetzt werden kann.

Beispiele

Ein Propylenpolymerisat (Schmelzindex 5/230 = 14 g/10 min; n-heptan-unlöslicher Anteil 96 Gew.-%) wurde mit steigenden Mengen Calciumcarbonat ausgerüstet und dann jeweils einem Korrosionstest unterzogen. Weiterhin wurde der Gelbwert der entsprechenden Formmasse bestimmt.

In Vergleichsversuchen wurde das Polypropylen mit entsprechenden Mengen Calciumstearat, Trikaliumcitrat und Hydrotalcit ausgerüstet.

Bei allen Versuchen wurde 0,1 Gew.-% Pentaerythrityl-tetrakis (3-(3,5-di-t-butyl-4-hydroxyphenyl)-propionat) zur Stabilisierung des Polypropylens eingesetzt.

Zur Bestimmung des Korrosionswertes der Materialien wurden jeweils 2 Eisenblättchen von 0,2 mm Stärke in die Formmassen-Proben so eingelegt, daß sie gleichmäßig von der Formmasse umgeben waren. dazu wurde in die Aussparung (φ 50 mm) eines 4 mm-Abstands-Rahmens etwa die Hälfte der abgewogenen Materialmengen (6 g) eingefüllt und die Blättchen mit der Pinzette so nebeneinander gelegt, daß sie sich weder gegenseitig noch den Rahmen berührten. Die Eisenblättchen waren ca. 20 mm lang und wurden in Aceton aufbewahrt, nachdem sie durch Abreiben in Aceton entfettet wurden. Vor dem Einlegen waren sie mit einem weichen Läppchen vom Aceton zu befreien. Die Eisenblättchen dürfen nicht mit den Fingern berührt werden.

Abstandsrahmen und Abdeckbleche (Aluminiumfolien) wurden in eine auf 250°C aufgeheizte Presse

2

gelegt und nach 5 min Kontaktdruck 1 h unter einem Druck von 100 atm verpreßt. Vorher wurde die 0,5 mm starke Aluminiumfolie, die zwischen Deckplatte und Abstandsrahmen eingefügt war, mit Vaseline eingerieben, um das Festkleben des Produktes an der Aluminiumfolie herabzusetzen. Danach wurde die Presse sofort abgekühlt. Die Eisenblättchen müssen noch nebeneinander liegen und dürfen nicht aus der Platte herausragen. Sie wurden aus der Platte herausgestanzt, gelocht und auf 1/10 mg genau gewogen. Selbstverständlich durften sie nicht mit der Hand berührt werden. Danach hängte man sie aufgereiht auf einen Kupferdraht in den Dampfstrom siedenden Wassers. Oberhalb der Wasseroberfläche befand sich ein Sieb, um zu verhindern, daß sich Wasserströpfchen an den Blättchen absetzten. Nach 1 h wurden die Eisenblättchen entnommen, bei Raumtemperatur 1 h gelagert und dann erneut gewogen. Die Gewichtszunahme in Prozent ergibt dem Korrosionswert.

Die Farbqualität der Formmassen wurde mittels Gelbwertsmessung nach DIN 6174 (Cielab-System) und DIN 6167 ASTM D 1925 (Normgelbwert) bestimmt.

Das Auftreten von Ablagerungen bzw. Ausdampfungen wurde während der Verarbeitung der Formmassen auf einer Extrusionsanlage beurteilt.

Eingesetzte Wirkkomponenten

### Beispiel 1

Calciumcarbonat 1

| Oberer Teilchendurchmesser: | 10 | $\mu$m |
| Mittlerer Teilchendurchmesser: | 0,05 | $\mu$m |
| Spezifische Oberfläche: | 46 | $m^2/g$ |
| Weißgrad: | 97 | % |

### Beispiel 2

Calciumcarbonat 2

| Oberer Teilchendurchmesser: | 6 | $\mu$m |
| Mittlerer Teilchendurchmesser: | 0,02 | $\mu$m |
| Spezifische Oberfläche: | 105 | $m^2/g$ |
| Weißgrad: | 96 | % |

Vergleichsbeispiel A
   Calciumstearat

Vergleichsbeispiel B
   Trikaliumcitrat

Vergleichsbeispiel C
   Hydrotalcit DHT-4A

Lieferant Fa. Kyowa Chemical Industry (Japan).

Tabelle Untersuchungsergebnisse

| Polypropylen + Wirkkomponente | Korrosionswert | | | | | Gelbwert | | | | | Ablagerungen/Ausdampfungen | | | | |
| --- | --- | --- | --- | --- | --- | --- | --- | --- | --- | --- | --- | --- | --- | --- | --- |
| | Beispiele | | Vergleichsbeispiele | | | Beispiele | | Vergleichsbeispiele | | | Beispiele | | Vergleichsbeispiele | | |
| | 1 | 2 | A | B | C | 1 | 2 | A | B | C | 1 | 2 | A | B | C |
| PP + 0,04 % | 0,14 | 0,11 | 0,45 | 0,03 | 0,4 | 13 | 12,9 | 12,9 | 13 | 16 | ++ | ++ | — | — | ++ |
| PP + 0,08 % | 0,10 | 0,09 | 0,40 | 0,02 | 0,25 | 13,7 | 13,7 | 13,9 | 14,2 | 18,1 | ++ | ++ | — | — | ++ |
| PP + 0,15 % | 0,09 | 0,07 | 0,15 | 0,02 | 0,19 | 14,4 | 14,2 | 14,5 | 14,8 | 20,5 | ++ | ++ | — | — | ++ |

Ablagerungen/Ausdampfungen während der Verarbeitung:

++ = keine Störungen durch Ablagerungen/Ausdampfungen

— = störende Ablagerungen und Ausdampfungen, die Produktionsunterbrechungen
   für Reinigungsarbeiten notwendig machen

EP 0 212 486 B1

# EP 0 212 486 B1

**Patentansprüche**

1. Polyolefin-Formmasse, bestehend aus einem Homo- oder Copolymerisat eines 1-Olefins mit 2 bis 10 Kohlenstoffatomen, 0,01 bis 0,2 Gew.-%, bezogen auf das Polyolefin, eines Calciumcarbonats, welches eine Teilchengröße kleiner 10 µm, eine mittlere Teilchengröße kleiner 0,1 µm, eine spezifische Oberfläche größer 40 m²/g und einen Weißgrad größer 90% besitzt.

2. Polyolefin-Formmasse nach Anspruch 1, dadurch gekennzeichnet, daß das 1-Olefinpolymerisat Polypropylen, Polyethylen oder eine Ethylen-Propylen-Copolymerisat ist.

3. Verfahren zur Verminderung der Korrosion an den Maschinen bei der Verarbeitung von Homo- oder Copolymerisaten eines 1-Olefins mit 2 bis 10 Kohlenstoffatomen durch Zusatz von Calciumcarbonat, dadurch gekennzeichnet, daß man den Polymerisaten 0,01 bis 0,2 Gew.-%, bezogen auf das Polyolefin, eines Calciumcarbonats beimischt, welches eine Teilchengröße kleiner 10 µm, eine mittlere Teilchengröße kleiner 0,1 µm, eine spezifische Oberfläche größer 40 m²/g und einen Weißgrad größer 90% besitzt.

**Revendications**

1. Matières à mouler en polyoléfines, formées d'un homopolymère ou d'un copolymère d'une oléfine-1 en $C_2$ à $C_{10}$, avec de 0,01 à 0,2%, du poids de la polyoléfine, d'un carbonate de calcium en particules inférieures à 10 µm et d'une dimension moyenne inférieure à 0,1 µm, ayant une surface spécifique supérieure à 40 m²/g et un degré de blancheur supérieur à 90%.

2. Matière à mouler selon la revendication 1, caractérisée en ce que le polymère est du polypropylène, du polyéthylene ou un copolymère d'éthylène et de propylène.

3. Procédé pour réduire la corrosion sur les machines dans le traitement de transformation d'homopolymères ou de copolymères de 1-oléfines en $C_2$ à $C_{10}$ par une addition de carbonate de calcium, procédé caractérisé en ce que l'on mélange aux polymères de 0,01 à 0,2%, du poids de la polyoléfine, d'un carbonate de calcium en particules inférieures à 10 µm et d'une dimension moyenne inférieure à 0,1 µm, et qui a une surface spécifique supérieure à 40 m²/g et un degré de blancheur de plus de 90%.

**Claims**

1. A polyolefin molding composition comprising a homopolymer or copolymer of a 1-olefin having 2 to 10 carbon atoms, 0.01 to 0.2% by weight, based on the polyolefin, of a calcium carbonate which has a particle size less than 10 µm, an average particle size of less than 0.1 µm, a specific surface area greater than 40 m²/g and a whiteness greater than 90%.

2. The polyolefin molding composition as claimed in claim 1, wherein the 1-olefin polymer is polypropylene, polyethylene or an ethylene/propylene copolymer.

3. A process for reducing corrosion on machines in the processing of homopolymers or copolymers of a 1-olefin having 2 to 10 carbon atoms by addition of calcium carbonate, which comprises admixing to the polymers 0.01 to 0.2% by weight, based on the polyolefin, of a calcium carbonate which has a particle size less than 10 µm, an average particle size less than 0.1 µm, a specific surface area greater than 40 m²/g and a whiteness greater than 90%.

5